# EUROPÄISCHE PATENTSCHRIFT

(11) **EP 0 518 168 B1**
(45) Veröffentlichungstag und Bekanntmachung des Hinweises auf die Patenterteilung: **13.09.1995**
(21) Anmeldenummer: 92109233.4
(22) Anmeldetag: 02.06.1992
(51) Int. Cl.: B62D 49/06, B62D 3/12, B62D 7/10

(54) **Lenkeinrichtung für ein Fahrzeug, insbesondere für einen Kleinschlepper für die Garten- und Rasenpflege**
Steering device for a vehicle, especially a light garden tractor or lawn mower
Dispositif de direction d'un véhicule, en particulier tracteur de jardin ou tondeuse de gazon

(30) Priorität: 14.06.1991 US 715171
(43) Veröffentlichungstag der Anmeldung: 16.12.1992
(73) Patentinhaber: DEERE & COMPANY, Moline, Illinois 61265 (US)
(72) Erfinder: Skriba, David Allen, Mayville, Wisconsin 53050 (US); Teal, Richard Donald, Horicon, Wisconsin 53032 (US); Hutchinson, Wayne Robert, Mayville, Wisconsin 53050 (US); Wasson, Steven Charles, Midland, Michigan 48667 (US); Daniel, David Robert, Midland, Michigan 48640 (US)
(74) Vertreter: Feldmann, Bernhard

(56) Entgegenhaltungen:
- DE-C- 385 015
- DE-C- 530 354
- FR-A- 848 502
- US-A- 1 360 518
- US-A- 3 561 282
- US-A- 4 580 462

## Beschreibung

Die Erfindung bezieht sich auf eine Lenkeinrichtung für ein einen Grundrahmen aufweisendes Fahrzeug, insbesondere für einen Kleinschlepper für die Garten- und Rasenpflege, mit einer an ihrem unteren Ende ein Ritzel drehfest aufnehmenden Lenkwelle, einer verzahnten Platte, die bei Drehung des in die Verzahnung der Platte eingreifenden Ritzels verstellbar ist und an der mindestens ein den Lenkeinschlag von lenkbaren Laufrädern bewirkender Lenkhebel angreift, und einer mit dem Grundrahmen verbindbaren Stützplatte, wobei die Platte zwischen dem Grundrahmen und der Stützplatte angeordnet ist.

Eine bekannte Lenkeinrichtung (US-A-4 441 735) ist für Kleinschlepper konzipiert. Sie weist eine über ein Lenkrad im Uhrzeigerdrehsinn oder entgegen dem Uhrzeigerdrehsinn betätigbare schräg im Fahrzeug angeordnete Lenkwelle und eine vertikal verlaufende Lenkspindel auf, an der Lenkhebel angreifen, die ein Einschlagen der lenkbaren Laufräder bewirken. Am unteren Ende der Lenkwelle ist ein relativ groß bemessenes Ritzel vorgesehen, das in die Verzahnung einer auf dem Lenkhebel aufsitzenden Sektorplatte eingreift. Eine gesonderte Tragplatte ist am Fahrzeugrahmen vorgesehen, die die Lenkwelle und -spindel lagert. Diese Lenkeinrichtung ermöglicht eine präzise Lenkung, ist aber Teile aufwendig, in Lagern anzuordnen und benötigt viel Platz. Sie erhöht zudem das Gewicht des Fahrzeuges und ist durch ein Gehäuse zu schützen.

Bei der bekannten Lenkeinrichtung, von der die Erfindung ausgeht (US-A-3 561 282), ist die Stützplatte mit einem Lager zur Aufnahme der Lenkwelle versehen, wobei die die Verzahnung aufweisende Platte am Grundrahmen schwenkbar gelagert ist. Auch diese Lenkeinrichtung benötigt eine Reihe von Lagerstellen und ist damit aufwendig.

Die mit der Erfindung zu lösende Aufgabe wird darin gesehen, diese Lenkeinrichtung einfacher und damit kostengünstiger auszubilden. Diese Aufgabe ist nach der Erfindung dadurch gelöst worden, daß die Platte mit einer sich quer erstreckenden Kante versehen ist, die die Verzahnung aufweist, und zwischen dem Grundrahmen und der Stützplatte quer verschiebbar und in Fahrzeuglängsrichtung unverschiebbar angeordnet ist. Auf diese Weise ist eine besonders einfache Lenkeinrichtung mit wenigen Teilen geschaffen. Zu schmierende Lager und das Gewicht und die Kosten erhöhende zusätzliche Tragvorrichtungen wurden vermieden. Eine solche Lenkeinrichtung eignet sich besonders gut für Kleinschlepper, deren Gewicht gering sein soll und bei denen der Platz für den Einbau der verschiedensten erforderlichen Aggregate begrenzt ist.

Hierbei kann die Platte mit einer sich quer erstreckenden Kante versehen sein, die die Verzahnung aufweist. Um der Platte bei ihrem seitlichen Verschieben einen sichern Halt zu geben, wird nach der Erfindung ferner vorgeschlagen, daß sie eine erste gegen den Grundrahmen verschiebbar anliegende Fläche aufweist, die sich von ihrer Verzahnung aus gesehen um ein beträchtliches Maß nach vorne erstreckt.

Nach einem weiteren Vorschlag der Erfindung ist vorgesehen, daß die Verzahnung der Platte auf einer geraden quer zur Fahrzeuglängsmitte verlaufenden Linie angeordnet und an ihren Enden durch in Fahrzeuglängsrichtung verlaufende Endteile begrenzt ist. Diese Endteile kommen bei dem sich seitlichen Verschieben der Platte gegen das Ritzel zur Anlage, wodurch die seitliche Verstellung der Platte und damit auch der Radeinschlag begrenzt ist. Gesonderte Teile für die Begrenzung des Radeinschlages sind damit ebenfalls nicht erforderlich.

Damit die richtigen Eingriffsverhältnisse zwischen Platte bzw. deren Verzahnung und dem Ritzel ständig gegeben sind, ist nach einer weiteren Maßnahme der Erfindung vorgesehen, daß die Lenkwelle mit einem Anschlagteil versehen ist, der in einer Öffnung der Stützplatte aufgenommen ist. Hierdurch wird außerdem bewirkt, daß sich die Lenkwelle in ihrem unteren Bereich nicht verstellen kann. Der Anschlagteil ist natürlich derart auszugestalten, daß er sich in der Stützplatte drehen kann.

Bei einer Betätigung der Lenkung soll sich auch die die Verzahnung aufweisende Platte nicht in Fahrzeuglängsrichtung bewegen können, was erfindungsgemäß dadurch erreicht werden kann, daß die Stützplatte mit mindestens einem vorspringenden Teil versehen ist, gegen den die Platte mit einer quer zur Fahrzeuglängsmitte verlaufenden Kante anliegt.

Wenn die Platzverhältnisse am Fahrzeug äußerst begrenzt sind, kann die Platte an ihrem rückwärtigen Ende ausgespart sein, wobei die rückwärtige quer verlaufende Kante der Aussparung die Verzahnung aufweist und die seitlichen Begrenzungen der Aussparung die Endteile bilden, die dem Radius des Ritzels angepaßt sind. Der nach vorne ausladende Teil der Platte ist dann noch vollkommen ausreichend für eine Führung, die auch ein mögliches Verkanten bei von den Rädern eingeleiteten Kräften verhindert.

Als besonders vorteilhaft wird es jedoch angesehen, wenn die Platte mit einem in Querrichtung verlaufenden Langloch versehen ist, das an einer seiner quer verlaufenden Längskanten die Verzahnung aufweist und das Ritzel derart aufnimmt, daß es gegen die andere Längskante anliegt. Die erforderlichen Führungsflächen befinden sich dann vor und hinter dem Langloch und das Ritzel verhindert eine Bewegung der Platte auch in Längsrichtung des Fahrzeuges.

Eine gute Lenkgeometrie ist dadurch erreichbar, daß beiderseits der Verzahnung an den beiden seitlichen Enden der Platte je ein Lenkhebel angelenkt ist oder daß bei der anderen Ausführung der Platte rückwärtig des Langloches im Bereich der Längsmittelebene je ein sich seitlich nach außen erstreckender Lenkhebel angelenkt ist.

Wenn die Platzverhältnisse es nicht zulassen oder, wenn das Innere des Fahrzeugaufbaues aus anderen Gründen nicht zugänglich ist, muß das Lenkgetriebe außerhalb des Fahrzeugsaufbaues vorgesehen werden. Für einen solchen Fall sieht die Erfindung vor, daß der Grundrahmen mit einer dem Durchmesser des Ritzels entsprechenden Öffnung versehen ist, die verzahnte Platte mit ihrer Oberseite gegen die Unterseite des Grundrahmens anliegt, mit ihrer Unterseite auf der mit dem Grundrahmen verbundenen Stützplatte aufliegt und der Anschlagteil, der unterhalb des Ritzels mit der Lenkwelle verbunden ist, einen größeren Durchmesser als das Ritzel aufweist. Auf diese Weise kann die Lenkwelle mit dem angebauten Ritzel und dem Anschlagteil von unten in den Fahrzeugaufbau eingeschoben und auf umgekehrte Weise wieder zu Wartungszwecken entfernt werden. Die verzahnte Platte kann dann gegebenenfalls an dem Fahrzeug verbleiben. Um aber auch diese noch entfernen zu können, braucht lediglich die Stützplatte noch abgenommen zu werden. Gegen ein Herausfallen kann die Lenkwelle durch die Nabe ihres Lenkrades gesichert werden, die gegen einen fahrzeugfesten Teil anliegen kann.

Sofern es die Platzverhältnisse zulassen, kann das Lenkgetriebe auch innerhalb des Fahrzeugaufbaues angeordnet werden. Hierfür sieht die Erfindung dann vor, daß die verzahnte Platte auf dem Grundrahmen aufliegt und durch die Stützplatte gesichert ist, wobei der Anschlagteil oberhalb des Ritzels vorgesehen ist und einen Durchmesser aufweist, der kleiner als der des Ritzels ist.

Schließlich kann eine spielfreie Anordnung dadurch erreicht werden, daß die Lenkwelle mit ihrem oberen Ende durch eine Öffnung in einem Rahmenteil geführt ist und in diesem Bereich mit einer Feder versehen ist, die gegen den Rahmenteil derart anliegt, daß die Lenkwelle nach oben gezogen wird.

In der Zeichnung ist ein nachfolgend näher erläutertes Ausführungsbeispiel der Erfindung mit zwei Abwandlungen dargestellt. Es zeigt:
- Fig. 1: ein Fahrzeug für den Einsatz in der Grundstückspflege,
- Fig. 2: eine Lenkeinrichtung in der Draufsicht,
- Fig. 3: die Lenkeinrichtung nach Fig. 2 in der Vorderansicht,
- Fig. 4: die Lenkeinrichtung nach Fig. 2 in Seitenansicht und im Schnitt,
- Fig. 5: eine gegenüber Fig. 2 abgewandelte Lenkeinrichtung und
- Fig. 6: eine weitere Abwandlung der Lenkeinrichtung nach Fig. 2.

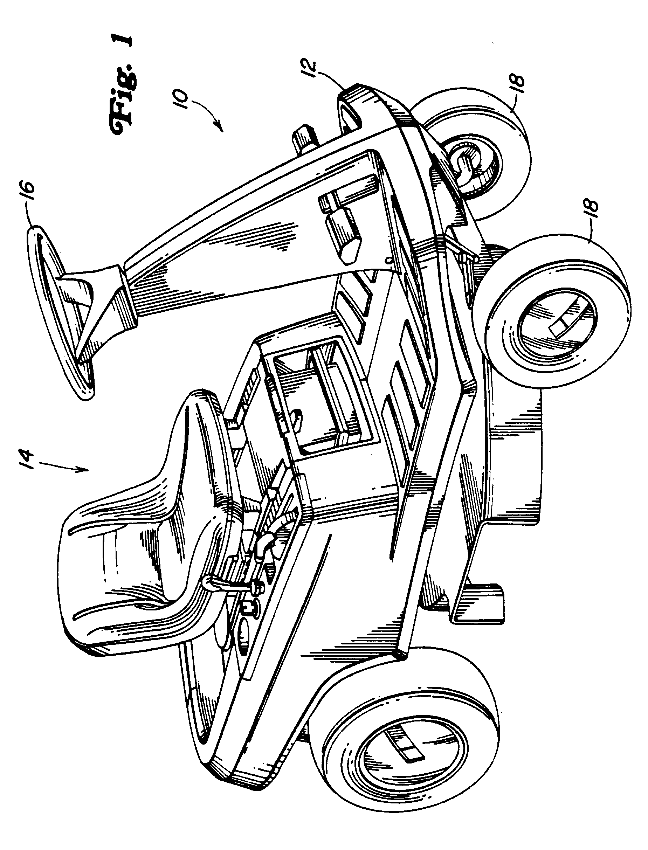

In Fig. 1 der Zeichnung ist ein Fahrzeug 10 dargestellt, an dem die Lenkeinrichtung nach dem bevorzugten Ausführungsbeispiel Verwendung finden kann. Das Fahrzeug 10 ist mit einem Grundrahmen 12, vorzugsweise aus Kunststoff ausgerüstet, der einen Fahrerstand 14 mit einem Lenkrad 16 und weiteren nicht dargestellten Bedienungselementen zum Fahren des Fahrzeuges aufweist. Am frontseitigen Ende des Fahrzeuges 10 sind zwei lenkbare vordere Laufräder 18 vorgesehen.

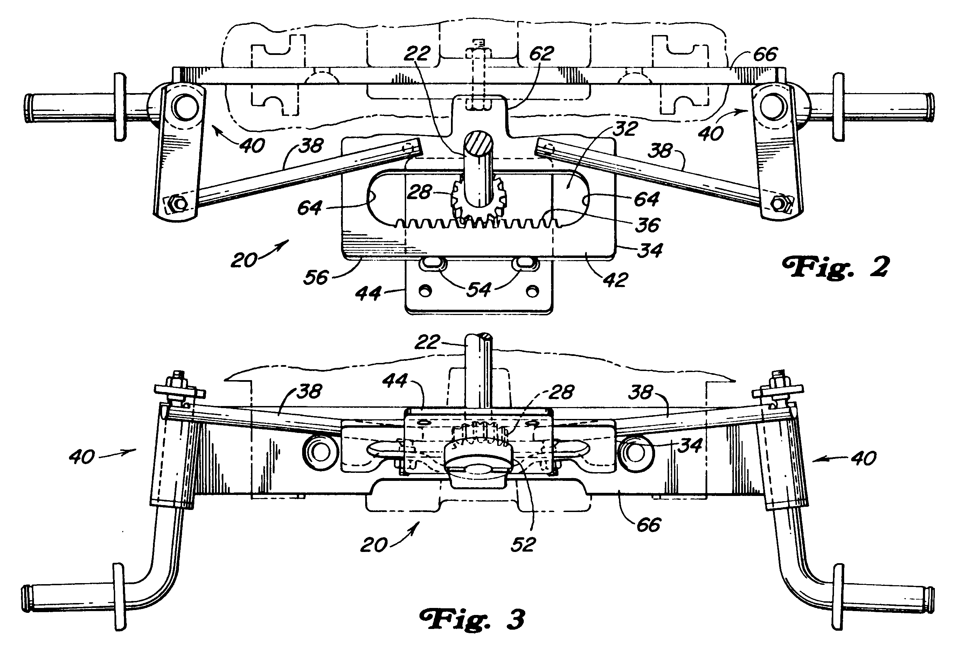

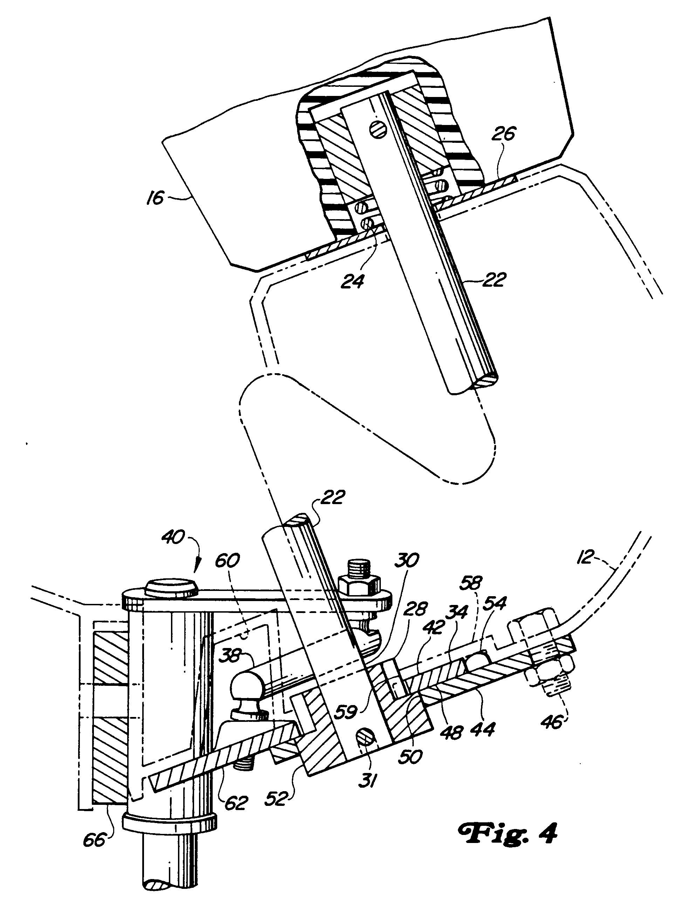

In den Fig. 2 bis 4 ist eine Lenkeinrichtung 20 für das Fahrzeug 10 dargestellt. Sie weist, wie am besten aus Fig. 4 zu ersehen ist, eine mit dem Lenkrad 16 verbundene Lenkwelle 22 auf, die sich von dem Fahrerstand aus nach unten erstreckt und über die beim Drehen des Lenkrades 16 die Laufräder 18 eingeschlagen werden können. Auf das obere Ende der Lenkwelle 22 ist eine Feder 24 aufgesteckt, die zwischen dem Lenkrad 16 oder einem mit dem Lenkrad verbundenen Teil und einer Wand 26, die am Fahrerstand 14 vorgesehen ist, derart angeordnet ist, daß sie bestrebt ist, das Lenkrad mit der Lenkwelle 22 nach oben zu drücken. Ein Ritzel 28 ist an dem unteren Teil 30 der Lenkwelle 22 vermittels einer Stiftverbindung 31 fest angeschlossen. Das Ritzel 28 greift in eine Öffnung 32 in Form eines quer verlaufenden Langloches ein, das in einer Zahnstangenplatte 34 eingearbeitet ist. Diese Öffnung ist an einer ihrer quer verlaufenden langen Seiten 37 gezahnt und bildet so einen Zahnstangenabschnitt 36, mit dem das Ritzel 28 kämmt. Wird das Lenkrad 16 eingeschlagen, so wird das Ritzel 28 eine entsprechende Drehung mitmachen und die Zahnstangenplatte 34 nach seitlich rechts oder links verschieben. Zwei Lenkstangen 38 sind noch an die Zahnstangenplatte 34 angeschlossen und erstrecken sich von dieser aus nach außen zu verschwenkbaren Radachsenträgern 40, so daß ein seitliches Verstellen der Zahnstangenplatte ein Verschwenken der Radachsenträger 40 zur Folge hat und das Fahrzeug 10 eine Kurve durchfahren kann.

Die Lenkeinrichtung 20 ist an dem Grundrahmen 12 angeschlossen. Aus Fig. 4 ist zu ersehen, daß die Zahnstangenplatte 34 mit ihrer Oberseite 42 über eine Stützplatte 44, die gegen ihre Unterseite 48 anliegt, nach oben gegen den Grundrahmen 12 gedrückt wird, wo sie verschiebbar gegen den Grundrahmen 12 anliegt. Die Stützplatte 44 ist über eine Schraubverbindung 46 unten an dem Grundrahmen 12 angeschlossen, und die Unterseite 48 der Zahnstangenplatte 34 liegt auf ihr verschiebbar auf. Auch in die Stützplatte 44 ist eine Öffnung 50 eingearbeitet, wie es ebenfalls aus Fig. 4 zu ersehen ist, in der ein kreisförmiger Anschlagteil 52 aufgenommen ist, der zu dem Ritzel 28 gehört und sich von diesem aus gesehen nach unten in die Öffnung 50 erstreckt. Der Anschlagteil 52 kann bei einem Einschlag des Lenkrades 16 in der Öffnung 50 drehen und, da die Stützplatte 44 in ihrer Lage festgelegt ist, sich aber nicht verschieben. Auf diese Wiese ist das Ritzel 28 und die mit dem Ritzel 28 verbundene Lenkwelle 22 gehindert, eine Bewegung in Längs- oder Querrichtung auszuführen. Der Anschlagteil 52 weist einen größeren Durchmesser als das Ritzel 28 auf und liegt damit gegen die Unterseite 48 der Zahnstangenplatte 34 an. Hierdurch wird verhindert, daß das Ritzel 28 und die Lenkwelle 22 nach oben aus ihrer Stellung in Fig. 4 verstellt werden können. Das Ritzel bleibt damit mit dem Zahnstangenabschnitt 36 ständig im Eingriff. Ein Verstellung des Ritzels 28 aus seiner Stellung in Fig. 4 nach unten wird durch die Feder 24 verhindert, worauf bereits hingewiesen wurde. An der Stützplatte 44 sind noch in derem frontseitigen Bereich zwei Vorsprünge 54 vorgesehen, gegen die die quer verlaufende Stirnkante 56 der Zahnstangenplatte 34 anliegt. Diese Vorsprünge 54 verhindern, daß die Zahnstangenplatte 34 sich im Einsatz nach vorne verstellen kann, insbesondere wenn sie über das Ritzel 28 quer verstellt wird. Die Vorsprünge 54 nehmen damit eine Führungsfunktion für die Zahnstangenplatte 34 wahr, die noch durch eine an die Rückseite der Zahnstangenplatte 34 angeformte Nase 62 unterstützt wird, die ihrerseits sich unter einem quer verlaufenden Kanalteil 60 erstreckt, mit ihrer Endseite gegen den Grundrahmen 12 anliegt und an diesem verschiebbar ist. Die Zahnstangenplatte 34 kann damit bei ihrer Querverstellung sich weder nach vorne noch nach rückwärts verstellen. Zur Aufnahme der Zahnstangenplatte 34 ist der Grundrahmen 12 entsprechend abgesetzt, was in der Fig. 4 durch die Bezugszahl 58 angedeutet ist. In diesem Bereich ist in den Grundrahmen 12 auch noch eine Öffnung 59 eingearbeitet, die im eingebauten Zustand das Ritzel 28 mit der Lenkwelle 22 aufnimmt. Der bereits angesprochene Kanalteil 60 ist ebenfalls Bestandteil des Grundrahmens 12 und schafft einen Freiraum für die beiden sich seitlich erstreckenden Lenkstangen 38, in dem diese sich beim Einschlagen des Lenkrades seitlich verstellen können.

Eine Vorderachse 66 ist vertikal schwenkbar in der Längsmittelachse des Fahrzeuges 10 an dessen Grundrahmen 12 angeschlossen. Mit den Enden der Vorderachse 66 sind die Radachsenträger 40 verschweißt oder anderweitig verbunden. Die Aufhängung der Vorderachse 66 ist derart, daß die vorderen Laufräder 18 ihren Bodenkontakt nicht verlieren, wenn das Fahrzeug 10 auf Bodenunebenheiten auftrifft. Dies ermöglicht die schwenkbare Aufhängung.

Will nun die Bedienungsperson eine Kurve durchfahren, so muß sie, wie bei solchen Fahrzeugen üblich, das Lenkrad 16 entsprechend einschlagen. Beim Einschlagen des Lenkrades 16 drehen die Lenkwelle 22, das Ritzel 28 und der Anschlagteil 52 entsprechend mit. Das sich im Eingriff mit dem Zahnstangenabschnitt 36 der Zahnstangenplatte 36 befindliche Ritzel 28 wird dabei die Zahnstangenplatte 34 entsprechend seitlich verschieben. Bei sich drehendem Ritzel 28 zeigt die Zahnstangenplatte 34 die Tendenz, sich nach vorne außer Eingriff mit dem Ritzel zu verstellen. Dieser Tendenz wirken aber die an der Stützplatte 44 vorgesehenen Vorsprünge 54 entgegen, gegen die die Zahnstangenplatte 34 anliegt und die den Zahnstangenabschnitt 36 der Zahnstangenplatte 34 mit dem Ritzel 28 in Eingriff halten. Auch zeigt das Ritzel 28 bei seiner Drehung die Tendenz, sich nach rückwärts aus seinem Eingriff mit dem Zahnstangenabschnitt 36 zu verstellen. Dem wirkt jedoch der Anschlagteil 52 entgegen, der in der Öffnung 50 der fest angeordneten Stützplatte 44 aufgenommen ist. Auf diese Weise wird der Eingriff von Ritzel 28 und Zahnstangenplatte 34 aufrecht erhalten, wenn das Fahrzeug 10 eine Kurve durchfährt. Diese Trennkräfte werden von der Stützplatte 44 aufgefangen, ohne daß wesentliche Beanspruchungen über die Schraubverbindung 46 in den Grundrahmen 12 gelangen würden.

Wenn sich die Zahnstangenplatte 34 infolge einer Drehung am Lenkrad 16 seitlich verstellt, verstellen sich auch die beiden Lenkstangen 38 entsprechend. Die an die Lenkstangen 38 angeschlossenen Radachsenträger 40 schlagen dann die Laufräder 18 entsprechend ein.

Wird das Lenkrad 16 noch weiter in derselben Richtung gedreht, so schlagen die vorderen Laufräder 18 noch weiter ein und eine Kurve mit einem kleineren Kurvenradius wird durchfahren. Bei einem noch weiteren Einschlag des Lenkrades 10 verschiebt sich die Zahnstangenplatte 34 noch weiter seitlich, bis schließlich ein abgerundeter Endteil 64 der in der Zahnstangenplatte 34 vorgesehenen Öffnung 32 gegen das Ritzel 28 zur Anlage kommt. Sobald die Zahnstangenplatte 34 mit ihrem Endteil 64 gegen das Ritzel 28 anliegt, ist ein weiteres Einschlagen der vorderen Laufräder 10 blockiert. Die Bedienungsperson kann dann auch das Lenkrad 16 nicht mehr weiter einschlagen. Ein Mindestwendekreis wird dadurch geschaffen, daß die Zahnstangenplatte 34 mit einem ihrer Endteile 64 an das Ritzel 28 zur Anlage kommen kann. Im ganzen gesehen, ermöglicht die Ausbildung der Zahnstangenplatte 34 eine einfache und kostengünstige Konstruktion für die Festlegung eines Mindestwendekreises. Anschläge für die Radachsenträger, die ein weiteres Einschlagen der Räder verhindern sollen, erübrigen sich damit.

Während des Einsatzes können Vibrationen oder andere beim Fahren auftretende Kräfte dazu führen, daß die Zahnstangenplatte 34 um eine quer verlaufende horizontale Achse schwenken oder drehen will. Da jedoch die Stützplatte 44 die Zahnstangenplatte 34 fest gegen den Grundrahmen 12 hält, wobei das Ritzel 28 stets seinen Eingriff mit dem Zahnstangenabschnitt 36 beibehält, wird eine Schwenkung der Zahnstangenplatte 34 um die vorgenannte horizontale Achse ausgeschlossen.

Die Zahnstangenplatte 34 nach dem bevorzugten Ausführungsbeispiel erstreckt mit Bezug auf das Ritzel 28 sowohl nach vorne als auch nach rückwärts in einer Richtung, die senkrecht zu dem seitlichen Verschiebeweg der Zahnstangenplatte 34 verläuft. Die Abmessung der Zahnstangenplatte in Längsrichtung des Fahrzeuges gesehen, kann beim bevorzugten Ausführungsbeispiel 115 mm betragen. Die Stützplatte 44 kann daher gegen die Zahnstangenplatte 34 auf einer relativ langen Längsfläche anliegen, so daß nicht so präzise geformte Teile Verwendung finden können. Dadurch, daß die Zahnstangenplatte 34 der vorliegenden Erfindung auch gegen den Rahmen über eine beträchtliche Längsfläche anliegt und gegen Drehung um die genannte Querachse gesichert ist, kann die Vorrichtung, die die Zahstangenplatte 34 sichert, große Toleranzen aufweisen und die Zahnstangenplatte dennoch sicher halten. Da die Oberfläche der Stützplatte 44 und die des Grundrahmens 12, mit denen die Zahnstangenplatte 34 Kontakt hat und die diese halten, relativ groß sind, kann das zu verwendende Material, aus dem der Grundrahmen 12, die Zahnstangeplatte 34 und die Stützplatte 44 bestehen, von geringer Festigkeit sein. Die Gesamtkosten für die Lenkeinrichtung werden damit vermindert.

Das in den Fig. 2 bis 4 dargestellte Ausführungsbeispiel weist demnach eine Zahnstangenplatte 34 mit einer Öffnung 32 auf, in der das an die Lenkwelle 22 angeschlossene Ritzel 28 aufgenommen ist. Beiderseits des Ritzels 28 und in Längsrichtung sowie in Querrichtung des Fahrzeuges gesehen, weist die Zahnstangenplatte 34 noch ausreichend viel Material auf, so daß die Lenkstangen 38 an die Zahnstangenplatte 34 im Bereich der Längsmittelebene des Fahrzeuges 10 angeschlossen werden können. Dynamische Lenkfehler werden dadurch reduziert.

Die Zahnstangenplatte 34 nach dem Ausführungsbeispiel in den Fig. 2 bis 4 ist mit einer ebenen Ober- und Unterseite 34 und 48 ausgerüstet. Diese können aber auch gebogen ausgebildet werden. Gleichfalls muß der Winkel, den die Lenkwelle 22 mit der Zahnstangenplatte 34 bildet, nicht unbedingt 90° betragen. Andere Winkel sind ebenfalls möglich.

Die Lenkwelle 22 des bevorzugten Ausführungsbeispiels wird an ihrem oberen Ende im Grundrahmen 12 oder in der mit diesem verbundenen Steuersäule über eine Feder 24 nach oben gedrückt. Die Feder 24 ist zwischen dem Lenkrad 16 und einer Wand 26 des Grundrahmens zusammengepreßt und verhindert, daß die Lenkwelle 22 nach unten rutschen kann. Der mit dem Ritzel 28 fest verbundene Anschlagteil 52 liegt im eingebauten Zustand gegen die Unterseite 48 der Zahnstangenplatte 34 an und verhindert damit, daß sich die Lenkwelle 22 unter der Wirkung der Feder 24 nach oben verstellen kann, da die Zahnstangenplatte 34 ihrerseits gegen eine Unterseite des Grundrahmens anliegt. Durch die Feder 24, den Anschlagteil 52 und die Zahnstangenplatte 34 ist damit eine nur wenige Teile benötigende Einrichtung geschaffen, die eine Verstellung der Lenkwelle 22 in Richtung ihrer Längsachse verhindert.

Aus Fig. 2 geht hervor, daß die Zahnstangenlenkung vor den Radachsenträgern 40 mit Bezug auf die Vorwärtsfahrt des Fahrzeuges 10 angeordnet ist. Die Zahnstangenlenkung kann aber auch rückwärtig der Radachsenträger 40 angeordnet werden. Die Draufsicht einer solchen Ausbildung ist aus Fig. 2 zu entnehmen mit der Ausnahme, daß dann die Fahrzeugfrontseite sich an der Oberseite der Fig. 2 befindet und nicht an deren Unterseite.

Die vorstehend beschriebene Lenkeinrichtung ist mit ihren wesentlichen Teilen unter dem Grundrahmen 12 angeordnet, und zwar an dessen Unterseite. Zu Anbauzwecken der Lenkeinrichtung braucht daher das Innere des Grundrahmens nicht zugänglich zu sein.

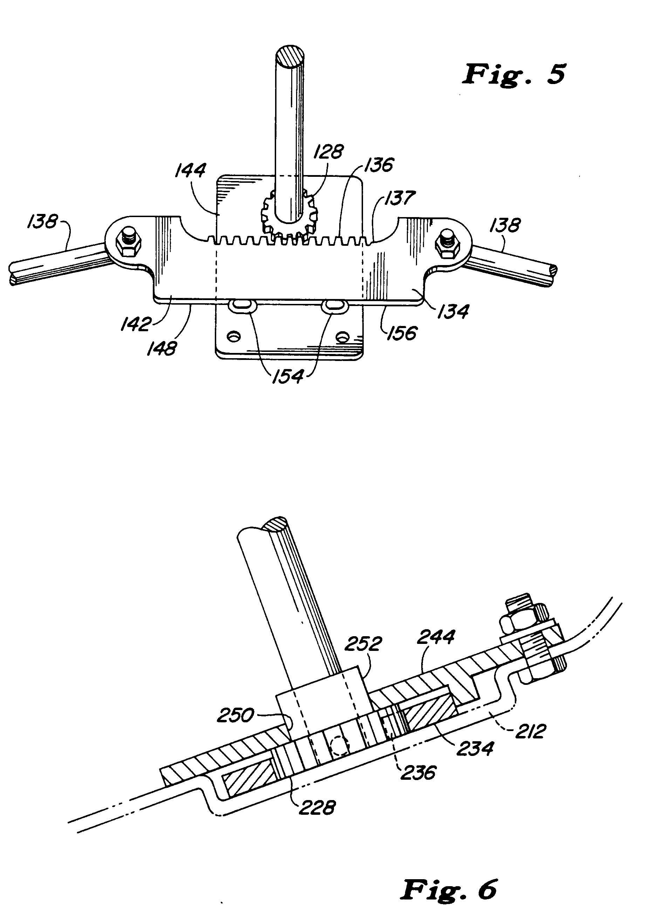

Eine Abwandlung des Ausführungsbeispiels nach den Fig. 2 bis 4 ist in der Fig. 5 gezeigt. Man erkennt eine Zahnstangenplatte 134 mit einem Zahnstangenabschnitt 136, der in ihre rückwärtige und quer verlaufende Kante 137 eingearbeitet ist. Ein quer verlaufendes Langloch, wie bei der Zahnstangenplatte 34, ist nicht vorgesehen. Vor dem Zahnstangenabschnitt befindet sich noch ausreichend viel Material. Die Oberseite 142 erstreckt sich damit von dem Ritzel 128 aus gesehen nach vorne oder mit Bezug auf Fig. 5 nach unten. Auch so entsteht eine große Fläche für die Zahnstangenplatte 134 und der Mechanismus zum Anschließen dieser Zahnstangenplatte 134 kann ebenfalls einfach ausgebildet sein und einen Werkstoff aufweisen, der relativ weich und billig ist. Vorsprünge 154 auf der Stützplatte 144 dienen dazu, die vordere quer verlaufende Kante 156 der Zahnstangenplatte 134 zu führen und dazu, einen Außereingriff von Ritzel 128 und Zahnstangenabschnitt 136 während eines Lenkmanövers zu verhindern. Diese Abwandlung eignet sich für Fahrzeuge, deren Lenkstangen 138 seitlich außen an der Zahnstangenplatte oder vor der Lenkwelle angeschlossen werden sollen. Dies ist dann von Vorteil, wenn andere Fahrzeugkomponenten den Raum unmittelbar hinter der Lenkwelle einnehmen.

Eine weitere Abwandlung des Ausführungsbeispiels nach den Fig. 2 bis 4 ist in Fig. 6 wiedergegeben. Diese Lenkeinrichtung eignet sich für einen Anbau auf einem Grundrahmen 212. Eine Zahnstangenplatte 234 wird über eine über ihr liegende Stützplatte 244 nach unten gehalten, so daß sie einen Gleitkontakt mit dem Grundrahmen 212 hat. Das Ritzel 228 ist dementsprechend unterhalb der Stützplatte 244 angeordnet und steht mit Zähnen 236 der Zahnstangenplatte 234 im Eingriff. Auch dieses Ritzel 228 ist mit einem runden Anschlagteil 252 versehen, der drehbar von einer Öffnung 250 in der Stützplatte 244 aufgenommen ist. Das Ritzel 228 liegt gegen die Unterseite der Stützplatte 244 und gegen die Oberseite des Grundrahmens 212 an, wodurch sein Eingriff mit der Zahnstangenplatte 234 erhalten bleibt und vermieden wird, daß eine Verstellung in Längsrichtung der Lenkwelle erfolgen kann. Die Abwandlung nach Fig. 6 kann mit Vorteil bei solchen Grundrahmen eingesetzt werden, dessen Inneres beim Einbau zugänglich ist.

## Patentansprüche

1. Lenkeinrichtung für ein einen Grundrahmen (12) aufweisendes Fahrzeug (10), insbesondere für einen Kleinschlepper für die Garten- und Rasenpflege, mit einer an ihrem unteren Ende ein Ritzel (28, 228) drehfest aufnehmenden Lenkwelle (22), einer verzahnten Platte (34, 234), die bei Drehung des in die Verzahnung der Platte eingreifenden Ritzels (28, 228) verstellbar ist und an der mindestens ein den Lenkeinschlag von lenkbaren Laufrädern (18) bewirkender Lenkhebel (38, 138) angreift, und einer mit dem Grundrahmen (12) verbindbaren Stützplatte (44, 244), wobei die Platte (34, 234) zwischen dem Grundrahmen (12) und der Stützplatte (44, 244) angeordnet ist, dadurch gekennzeichnet, daß die Platte (34, 234) mit einer sich quer erstreckenden Kante (37, 137) versehen ist, die die Verzahnung aufweist, und zwischen dem Grundrahmen (12) und der Stützplatte (44, 244) quer verschiebbar und in Fahrzeuglängsrichtung unverschiebbar angeordnet ist.

2. Lenkeinrichtung nach Anspruch 1, dadurch gekennzeichnet, daß die Platte (34, 234) eine erste gegen den Grundrahmen (12) verschiebbar anliegende Fläche (42) aufweist, die sich von ihrer Verzahnung aus gesehen um ein beträchtliches Maß nach vorne erstreckt.

3. Lenkeinrichtung nach Anspruch 1, dadurch gekennzeichnet, daß die Verzahnung der Platte (34, 234) auf einer geraden quer zur Fahrzeuglängsmitte verlaufenden Linie angeordnet und an ihren Enden durch in Fahrzeuglängsrichtung verlaufende Endteile (64) begrenzt ist.

4. Lenkeinrichtung nach einem oder mehreren der vorherigen Ansprüche, dadurch gekennzeichnet, daß die Lenkwelle (22) mit einem Anschlagteil (52, 252) versehen ist, der in einer Öffnung (50, 250) der Stützplatte (44, 244) aufgenommen ist.

5. Lenkeinrichtung nach einem oder mehreren der vorherigen Ansprüche, dadurch gekennzeichnet, daß die Stützplatte (44, 244) mit mindestens einem vorspringenden Teil (54, 154) versehen ist, gegen den die Platte (34, 234) mit einer quer zur Fahrzeuglängsmitte verlaufenden Kante (56, 156) anliegt.

6. Lenkeinrichtung nach Anspruch 3, dadurch gekennzeichnet, daß die Platte (134) an ihrem rückwärtigen Ende ausgespart ist, die rückwärtige quer verlaufende Kante der Aussparung die Verzahnung aufweist und die seitlichen Begrenzungen der Aussparung die Endteile bilden, die dem Radius des Ritzels (128) angepaßt sind.

7. Lenkeinrichtung nach Anspruch 3, dadurch gekennzeichnet, daß die Platte (34) mit einem in Querrichtung verlaufenden Langloch versehen ist, das an einer seiner quer verlaufenden Längskanten die Verzahnung aufweist und das Ritzel (28) derart aufnimmt, daß es gegen die andere Längskante anliegt.

8. Lenkeinrichtung nach Anspruch 6, dadurch gekennzeichnet, daß beiderseits der Verzahnung an den beiden seitlichen Enden der Platte (134) je ein Lenkhebel (138) angelenkt ist.

9. Lenkeinrichtung nach Anspruch 7, dadurch gekennzeichnet, daß rückwärtig des Langloches im Bereich der Längsmittelebene des Fahrzeuges (10) je ein sich seitlich nach außen erstreckender Lenkhebel (38) an der Platte (34) angelenkt ist.

10. Lenkeinrichtung nach einem oder mehreren der vorherigen Ansprüche, dadurch gekennzeichnet, daß der Grundrahmen (12) mit einer dem Durchmesser des Ritzels (28) entsprechenden Öffnung versehen ist, die verzahnte Platte (34) mit ihrer Oberseite (42) gegen die Unterseite des Grundrahmens anliegt, mit ihrer Unterseite auf der mit dem Grundrahmen (12) verbundenen Stützplatte (44) aufliegt und der Anschlagteil (52), der unterhalb des Ritzels (28) mit der Lenkwelle (22) verbunden ist, einen größeren Durchmesser als das Ritzel (28) aufweist.

11. Lenkeinrichtung nach einem oder mehreren der Ansprüche 1 bis 9, dadurch gekennzeichnet, daß die verzahnte Platte (234) auf dem Grundrahmen (212) aufliegt, durch die Stützplatte (244) gesichert ist, wobei der Anschlagteil (252) oberhalb des Ritzels (228) vorgesehen ist und einen Durchmesser aufweist, der kleiner als der des Ritzels (228) ist.

12. Lenkeinrichtung nach einem oder mehreren der vorherigen Ansprüche, dadurch gekennzeichnet, daß die Lenkwelle (22) mit ihrem oberen Ende durch eine Öffnung in einem Rahmenteil geführt ist und in diesem Bereich mit einer Feder (24) versehen ist, die gegen den Rahmenteil derart anliegt, daß die Lenkwelle (22) nach oben gezogen wird.

## Claims

1. Steering device for a vehicle (10) having a frame (12), and in particular for a small tractor for the garden and lawn care, with a steering column (22) which receives a pinion gear (28, 228) in a non-rotatable manner at its lower end, with a toothed plate (34, 234) which may be displaced upon rotation of the pinion gear (28, 228) engaging in the teeth of the plate, and upon which there engages at least one steering lever (38, 138) which effects the steering deflection of steerable ground wheels (18) , and with a support plate (44, 244) connectable to the frame (12), the plate (34, 234) being disposed between the frame (12) and the support plate (44, 244), characterised in that the plate (34, 234) is provided with a transversely-extending edge (37, 137) which carries the teeth and which is disposed between the frame (12) and the support plate (44, 244) so as to be transversely displaceable but fixed in the longitudinal direction of the vehicle.

2. Steering device according to claim 1, characterised in that the plate (34, 234) has a first surface (42) , in sliding contact with the frame (12) , and which, seen from its teeth, projects forward to a considerable extent.

3. Steering device according to claim 1, characterised in that the toothing of the plate (34, 234) is disposed on a straight line extending transversely to the longitudinal medial axis of the vehicle, and is limited at its ends by end portions (64) extending in the longitudinal direction of the vehicle.

4. Steering device according to one or more of the preceding claims, characterised in that the steering column (22) is provided with a stop portion (52, 252) which is accommodated in an orifice (50, 250) in the support plate (44, 144).

5. Steering device according to one or more of the preceding claims, characterised in that the support plate (44, 244) is provided with at least one projection portion (54, 154) against which the plate (34, 234) bears with an edge (56, 156) extending transversely to the vehicle's longitudinal centre line.

6. Steering device according to claim 3, characterised in that the plate (134) is recessed at its rearward end, the rearward transversely-extending edge of the recess containing the toothing and the lateral limits of the recess forming the end portions, which are adapted to the radius of the pinion (128).

7. Steering device according to claim 3, characterised in that the plate (34) is provided with a transversely-extending elongate slot which bears the toothing on one of its transversely-extending longitudinal edges, and accommodates the pinion (28) in such a way that is bears against the other longitudinal edge.

8. Steering device according to claim 6, characterised in that a steering lever (138) is respectively articulated on either side of the toothing to the two lateral ends of the plate (134).

9. Steering device according to claim 7, characterised in that laterally outwardly-extending steering levers (38) are respectively articulated to the plate (34), to the rear of the elongate slot in the region of the longitudinal medial plane of the vehicle (10).

10. Steering device according to one or more of the preceding claims, characterised in that the frame (12) is provided with an orifice matching the diameter of the pinion (28), the toothed plate (34) bears with its upper side (42) against the underside of the frame, bears with its underside against the support plate (44) connected to the frame (12), and the stop portion (52), connected beneath the pinion (28) to the steering column (22), has a larger diameter than the pinion (28).

11. Steering device according to one or more of claims 1 to 9, characterised in that the toothed plate (234) bears on the frame (212), is secured by the support plate (244), the stop portion (252) being provided above the pinion (228) and having a diameter smaller than that of the pinion (228).

12. Steering device according to one or more of the preceding claims, characterised in that the steering column (22) is guided with its upper end through an orifice in a frame portion, and is provided in this region with a spring (24) which bears against the frame portion in such a way that the steering column (22) is drawn upwards.

## Revendications

1. Dispositif de direction pour un véhicule (10) présentant un châssis de base (12), notamment pour un petit tracteur pour le jardinage et l'entretien du gazon, comportant un arbre de direction (22) recevant à son extrémité inférieure, un pignon (28, 228) fixe en rotation par rapport audit arbre (22), une plaque dentée (34, 234) qui peut être déplacée lors de la rotation du pignon (28, 228) s'engrenant dans la denture de la plaque et avec laquelle est en contact au moins un levier de commande de roue (38, 138) effectuant le braquage de roues orientables (18) et comportant une plaque d'appui (44, 244) pouvant être reliée au châssis de base (12), la plaque (34, 234) étant disposée entre le châssis de base (12), et la plaque d'apppui (44, 244), caractérisé en ce que la plaque (34, 234) est pourvue d'un bord (37, 137) qui s'étend transversalement et qui comporte la denture, et en ce qu'elle est disposée entre le châssis de base (12) et la plaque d'appui (44, 244) de manière à se déplacer transversalement et a ne pas pouvoir se déplacer dans le sens longitudinal du véhicule.

2. Dispositif de direction selon la revendication 1, caractérisé en ce que la plaque (34, 234) présente une première surface (42) portant de manière mobile contre le châssis de base (12) et qui, vue depuis sa denture, s'étend sensiblement vers l'avant.

3. Dispositif de direction selon la revendication 1, caractérisé en ce que la denture de la plaque (34, 234) est disposée sur une ligne droite, s'étendant transversalement à l'axe longitudinal du véhicule et en ce qu'elle est bordée à ses extrémités par des parties d'extrémité (64) s'étendant dans le sens longitudinal du véhicule.

4. Dispositif de direction selon une ou plusieurs des revendications précédentes, caractérisé en ce que l'arbre de direction (22) est pourvu d'un élément de butée (52, 252) qui est reçu dans une ouverture (50, 250) de la plaque d'appui (44, 244).

5. Dispositif de direction selon une ou plusieurs des revendications précédentes, caractérisé en ce que la plaque d'appui (44, 244) est pourvue d'au moins une partie en saillie (54, 154) contre laquelle vient s'appliquer la plaque (34, 234) par un bord (56, 156) s'étendant transversalement à l'axe longitudinal du véhicule.

6. Dispositif de direction selon la revendication 3, caractérisé en ce que la plaque (134) est évidée au niveau de son extrémité arrière, le bord arrière dirigé transversalement, de l'évidement présentant la denture et les limites latérales de l'évidement constituant les parties d'extrémités, qui sont adaptées au rayon du pignon (128).

7. Dispositif de direction selon la revendication 3, caractérisé en ce que la plaque (34) est pourvue d'un trou oblong s'étendant dans le sens transversal et qui présente la denture sur l'un de ses bords longitudinaux s'étendant transversalement et reçoit le pignon (28) de telle manière que celui-ci s'appuie contre l'autre bord longitudinal.

8. Dispositif de direction selon la revendication 6, caractérisé en ce qu'il est prévu, de part et d'autre de la denture, au niveau des deux extrémités latérales de la plaque (134), chaque fois un levier de commande de roue (138) monté à articulation.

9. Dispositif de direction selon la revendication 7, caractérisé en ce que, à l'arrière du trou oblong dans la zone du plan médian longitudinal du véhicule (10), il est prévu chaque fois un levier de commande de roue (38) s'étendant latéralement vers l'extérieur et monté à articulation sur la plaque (34).

10. Dispositif de direction selon une ou plusieurs des revendications précédentes, caractérisé en ce que la châssis de base (12) comporte une ouverture correspondant au diamètre du pignon (28), en ce que la plaque dentée (34) porte sa face supérieure (42) contre le dessous du châssis de base et porte par sa face inférieure sur la plaque d'appui (44) reliée au châssis de base (12) et en ce que l'élément de butée (52), qui est relié à l'arbre de direction (22) au-dessous du pignon (28) présente un plus grand diamètre que le pignon (28).

11. Dispositif de direction selon une ou plusieurs des revendications 1 à 9, caractérisé en ce que la plaque dentée (234) s'appuie sur le châssis de base (212) et est bloquée par la plaque d'appui (244), tandis que l'élément de butée (252) est prévu au-dessus du pignon (228) et présente un diamètre qui est plus petit que celui du pignon (228).

12. Dispositif de direction selon une ou plusieurs des revendications précédentes, caractérisé en ce que l'arbre de direction (22) est guidé par son extrémité supérieure dans une ouverture présente dans une partie du châssis et est pourvu, dans cette zone, d'un ressort (24) qui porte contre la partie du châssis de telle manière que l'arbre de direction (22) soit tiré vers le haut.
